# EUROPÄISCHE PATENTSCHRIFT

(11) **EP 1 423 341 B1**
(45) Veröffentlichungstag und Bekanntmachung des Hinweises auf die Patenterteilung: **29.12.2004**
(21) Anmeldenummer: 02797911.1
(22) Anmeldetag: 07.08.2002
(51) Int. Cl.: C03B 9/13

(54) **VERFAHREN UND FERTIGFORMSTATION ZUM FERTIGBLASEN EINES GLASBEHÄLTERS**
METHOD AND BLOW-MOULDING STATION FOR THE FINAL BLOWING OF A GLASS CONTAINER
PROCEDE ET STATION DE FINITION POUR LE SOUFFLAGE FINAL D'UN CONTENANT EN VERRE

(30) Priorität: 08.09.2001 DE 10144112
(43) Veröffentlichungstag der Anmeldung: 02.06.2004
(73) Patentinhaber: Heye Glas GmbH, 31683 Obernkirchen (DE)
(72) Erfinder: MONDEN, Norbert, 31749 Auetal (DE); FÜHR, Hans-Bernhard, 01445 Radebeul (DE)
(74) Vertreter: Callies, Rainer
(86) Internationale Anmeldenummer: PCT/EP2002/008804
(87) Internationale Veröffentlichungsnummer: WO 2003/022756

(56) Entgegenhaltungen:
- US-A- 3 951 637
- US-A- 4 336 050
- US-A- 4 518 409

## Beschreibung

Die Erfindung betrifft Verfahren zum Fertigblasen eines Külbels in einer Ferfigform einer Fertigformstation einer Glasformmaschine und Fertigformstationen einer Glasformmaschine.

Bei einer bekannten Fertigformstation gemäß dem Oberbegriff von Anspruch 1 oder 5 (US 1 911 119 A, Fig. 22) erstrecken sich die Fertigformhälften bis über den Boden des fertigen Glasbehälters hinaus und umklammern einen gesonderten Fertigformboden. Dadurch entstehen an den gegenüberliegenden Längsteilfugen der Fertigformhälften komplementäre Längsnähte an dem fertigen Glasbehälter. Diese Längsnähte werden mit zunehmendem Verschleiß der Fertigformhälften größer und störender.

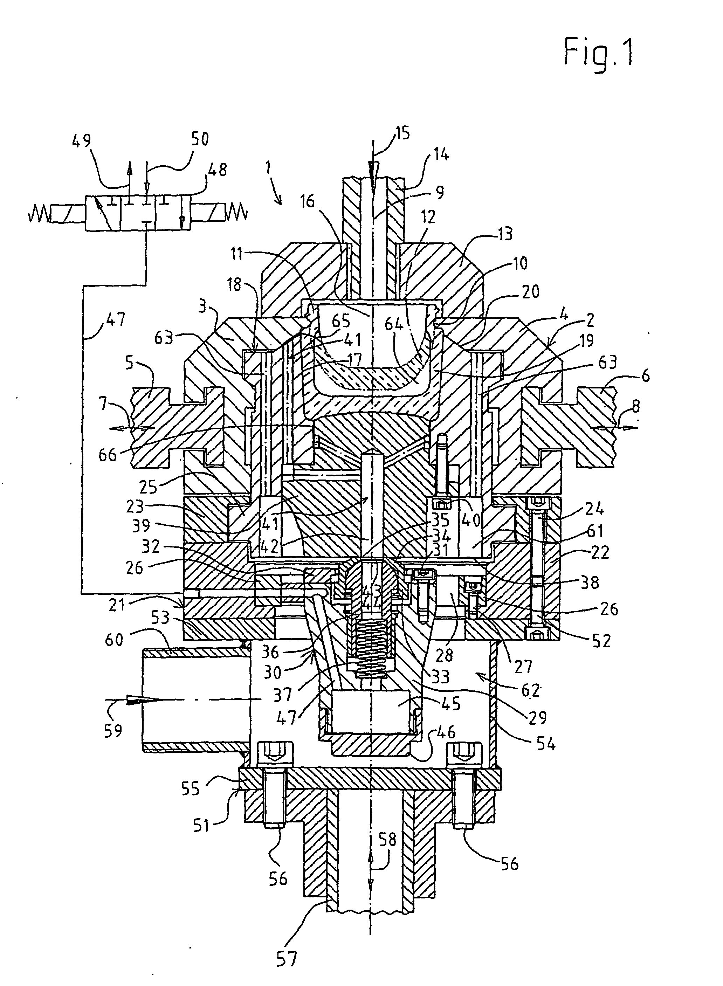

Bei einer bekannten Fertigformstation gemäß dem Oberbegriff von Anspruch 2 oder 6 (DE-Patentschrift 1 704 112 der Anmelderin, S2 in Fig. 1) übergreifen Fertigformhälften oben ein geschlossenes längsgeteiltes Mündungswerkzeug mit dem daran hängenden Külbel und unten einen Fertigformboden. Auch hier sind Längsnähte an dem fertigen Glasbehälter nicht zu vermeiden.

Aus der EP 0 102 001 B1 der Anmelderin, Fig. 1, ist es an sich bekannt, in einer Vorformstation einer Press-Blas-Glasformmaschine mit Vorformmittelstückhälften oben ein geschlossenes längsgeteiltes Mündungswerkzeug und unten eine nicht längsgeteilte Blockform zu übergreifen. In einer koaxialen Bodenausnehmung der Blockform ist zur Schaffung oder Aufhebung eines Zusatzvolumens der Blockformausnehmung ein Kolben zyklisch hin und her verschiebbar. Über ein Kanalsystem in der Blockform und in dem Kolben und ein Wegeventil kann die Formausnehmung wahlweise mit einer Vakuumleitung oder einer Druckluftleitung verbunden werden.

Aus der DE 23 24 953 B2, Fig. 3 und 4, der Anmelderin ist es an sich bekannt, zum Drehformen eines Glasbehälters den durch ein längsgeteiltes Mündungswerkzeug gehaltenen, ungeteilten Führungsring während des Fertigblasens des Glasbehälters drehend anzutreiben. Dazu trägt der Führungsring achsparallele Stifte, mit denen radiale Mitnahmestifte des drehend antreibbaren Blaskopfes in Antriebsberührung bewegbar sind. Der Führungsring überträgt (Fig. 11 und 12) seine Drehbewegung auf die Mündung des Glasbehälters und folglich auf den Glasbehälter insgesamt. Dies führt dazu, dass sich der Glasbehälter während des Fertigformens einerseits relativ zu dem geschlossenen Mündungswerkzeug und andererseits relativ zu einer axial bewegbaren, ungeteilten Blockform dreht. Mündungswerkzeug und Blockform fluchten axial miteinander und weisen zwischen sich einen Spalt auf. Diese Fertigform ist nur für das Drehformen geeignet und vorgesehen.

Die DE 197 13 281 A1 zeigt als an sich bekannt einen Blaskopf, der in allseitigem Abstand über die Mündung eines Külbels gestülpt und auf die geschlossene Fertigform aufgesetzt wird.

Aus der JP 57-145037 A ist es an sich bekannt, beim Blasformen eines Glasbehälters den das Külbel tragenden Halsring und einen zentralen Bodeneinsatz der Blasform synchron drehend anzutreiben.

Aus der JP 07-276483 A ist es an sich bekannt, die Fertigform aus einer nicht längsgeteilten Blockform und einer längsgeteilten Bodenform zusammenzustellen. Oben auf der Blockform liegt ein längsgeteiltes Mündungswerkzeug auf. Während des Fertigblasens findet keine Relativdrehung zwischen dem Glasbehälter und der Fertigform statt. Zum Ausformen wird die Bodenform geöffnet und der Glasbehälter axial aus der Blockform herausgezogen.

Aus der US 4 336 050 A ist es an sich bekannt, ein Külbel durch Pressen vorzuformen. Jede Vorform weist zum Beispiel gemäß Fig. 3 einen Vorformboden am Ende einer Kolbenstange, eine nicht längsgeteilte Blockform für einen bodennahen Teil des Rumpfes des Külbels, ein längsgeteiltes Vorformmittetstück für den mündungsnahen Teil des Rumpfes des Külbels und ein längsgeteiltes Mündungswerkzeug für die Mündung des Külbels auf. Damit ist klar, dass nur im Bereich der Blockform Längsnähte an dem Külbel vermieden werden können, während im Bereich des längsgeteilten Vorformmittelstücks Längsnähte nicht vermeidbar sind. Diese Druckschrift lässt offen, wie das Fertigformen des Külbels geschieht.

Der Erfindung liegt die Aufgabe zugrunde, Längsnähte am fertigen Glasbehälter weitestgehend zu vermeiden.

Diese Aufgabe ist hinsichtlich des Verfahrens durch die Merkmale des Anspruchs 1 oder 2 gelöst. In beiden Fällen verhindert die Blockform, dass in ihrem Wirkungsbereich Längsnähte an dem fertigen Glasbehälter entstehen. Damit bieten solche Glasbehälter ringsum einen gleichmäßigen Anblick. Vorteilhaft ist es, wenn der Rumpf der Glasbehälter sich zur Mündung hin leicht konisch erweitert. Dadurch wird das Entformen des fertigen Glasbehälters aus der Blockform erleichtert.

Durch die Merkmale des Anspruchs 3 wird ein schnelles Anlegen des Külbels an die Wand der Formausnehmung der Blockform während des Fertigblasens begünstigt.

Gemäß Anspruch 4 kann das Entformen des fertigen Glasbehälters aus der Blockform erleichtert und verbessert werden.

Die vorerwähnte Aufgabe ist hinsichtlich der Fertigformstation durch die Merkmale des Anspruchs 5 oder 6 gelöst. Es ergeben sich grundsätzlich die gleichen Vorteile wie zu Anspruch 1 oder 2.

Gemäß Anspruch 7 findet vorzugsweise ein 3Wege/3Stellungsventil als Wegeventil Verwendung.

Die Merkmale des Anspruchs 8 gestatten einen schnellen Austausch der Blockform bei Wartung oder Verschleiß.

Gemäß Anspruch 9 wird beim Einsetzen der Blockform in die Aufnahmevorrichtung gemäß Anspruch 8 selbsttätig die Verbindung zwischen dem Kanalsystem der Blockform und dem Kanal der Verbindungsvorrichtung hergestellt. Vorzugsweise ist ein Element der Verbindungsvorrichtung federnd gegen die Bodenfläche der Blockform vorgespannt. So ergibt sich für Vakuum und Druckluft eine hinreichend dichte Spaltdichtung.

Die Umfangsspalte gemäß Anspruch 10 und/oder 11 fördern eine besonders schnelle Be- oder Entlüftung der Formausnehmung.

Die Merkmale des Anspruchs 12 bieten zur Schaffung des zweiten Umfangsspalts fertigungstechnische Vorteile. Außerdem lässt sich in dem Bodeneinsatz das Kanalsystem leichter herstellen.

Gemäß Anspruch 13 ist für eine einfache und sehr wirksame Kühlung der Blockform gesorgt.

Diese und weitere Merkmale und Vorteile der Erfindung werden nachfolgend anhand der in den Zeichnungen dargestellten Ausführungsbeispiele näher erläutert. Es zeigt
Fig. 1 einen Längsschnitt durch eine erste Ausführungsform der Fertigformstation mit Fertigformhälften und

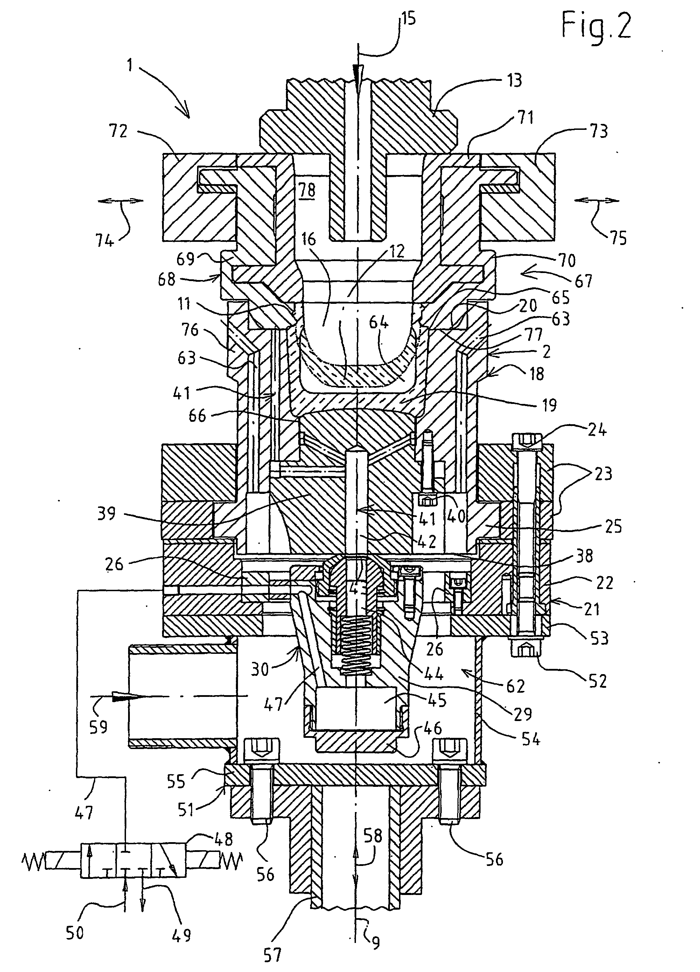

Fig. 2 einen Längsschnitt durch eine andere Ausführungsform der Erfindung ohne Fertigformhälften.

Fig. 1 zeigt eine Fertigformstation 1 einer Glasformmaschine, z.B. einer sogenannten I.S.(Individual Section)-Glasformmaschine. In jeder Fertigformstation 1 können eine oder mehrere Fertigformen 2 für Einfach- oder Mehrfachformbetrieb angeordnet sein. Zur Vereinfachung ist in Fig. 1 nur eine solche Fertigform 2 dargestellt.

Die Fertigform 2 weist durch Längsteilung entstandene Fertigformhälften 3 und 4 auf. Jede Fertigformhälfte 3, 4 ist in eine Fertigformhalterhälfte 5 und 6 eingehängt und durch diese in den Richtungen von Doppelpfeilen 7 und 8 quer zu einer Längsachse 9 der Fertigform 2 bewegbar. Diese Querbewegung kann entweder linear oder durch eine Zange auf einem Kreisbogen geschehen. So lassen sich die Fertigformhälften 3, 4 zwischen einer in Fig. 1 dargestellten geschlossenen Stellung und einer von der Längsachse 9 weiter entfernten offenen Stellung bewegen.

In der geschlossenen Stellung stehen die Fertigformhälften 3, 4 nur mit einer axial verhältnismäßig kurzen Ringzone 10 an einer Mündung 11 eines Külbels 12 in Berührung. Das Külbel 12 wurde zuvor durch ein (nur in Fig. 2) gezeichnetes Mündungswerkzeug z.B. durch den Invertmechanismus einer I.S.-Glasformmaschine, aus einer Vorformstation in die Fertigformstation 1 transportiert und durch Öffnen des Mündungswerkzeugs an die zuvor geschlossenen Fertigformhälften 3, 4 in der in Fig. 1 gezeichneten Weise übergeben.

Über die Mündung 11 und in Berührung mit den geschlossenen Fertigformhälften 3, 4 ist ein Blaskopf 13 gestülpt. Dem Blaskopf 13 wird getaktet durch eine Stutzen 14 in Richtung eines Pfeils 15 Druckluft zugeführt, die in das Innere des Külbels 12 gelangt und das Külbel 12 fertig bläst. Dabei dünnt sich die Wand des Külbels zunehmend aus und legt sich in einer Formausnehmung 16 der Fertigform 2 einerseits noch weiter an die Fertigformhälften 3, 4 und andererseits an eine Innenwand 17 einer nicht längsgeteilten Blockform 18 an. Der Endzustand dieses Fertigblasens ist in Fig. 1 mit einem fertigen Glasbehälter 19 dargestellt.

Bei geschlossener Vorform 2 befindet sich die Blockform 18 in ihrer oberen Arbeitsstellung. Dabei wird die Blockform 18 von den Fertigformhälften 3, 4 umklammert. In diesem Zustand liegt ein freier Rand 20 der Blockform 18 an einer komplementären Gegenfläche der Fertigformhälften 3, 4 an.

Unterhalb der Fertigformhälften 3, 4 ist die Blockform 18 in einer Aufnahmevorrichtung 21 gehalten. Die Aufnahmevorrichtung 21 weist ein ringförmiges Unterteil 22 auf, mit dem ein im Querschnitt L-förmiger Deckring 23 durch Schrauben 24 verschraubt ist. Der Deckring 23 nimmt auf diese Weise einen Außenflansch 25 der Blockform 18 auf. Im Inneren des Unterteils 22 ist ein Speichenring 26 durch Schrauben 27 befestigt. Der Speichenring 26 weist über den Umfang verteilt mehrere Speichen 28 auf, die innen an einem Gehäuse 29 einer Verbindungsvorrichtung 30 befestigt sind. Ein mit Schrauben 31 an dem Gehäuse 29 befestigter Kopfring 32 dient als axialer Anschlag für einen Außenflansch 33 einer Dichtkappe 34 mit einer zentralen Durchbrechung 35. An der Dichtkappe 34 liegt innen ein halbkugelförmiger Kopf eines in dem Gehäuse 29 axial verschiebbaren Druckstempels 36 an. Zwischen dem Druckstempel 36 und dem Gehäuse 29 ist eine Druckfeder 37 angeordnet. Die Druckfeder 37 sorgt dafür, dass die Dichtkappe 34 stets mit einer gewissen Vorspannung an einer Bodenfläche 38 der Blockform 18 anliegt.

Die Blockform 18 weist einen Bodeneinsatz 39 auf, der mit Schrauben 40 an der übrigen Blockform 18 befestigt ist. In der Blockform 18 einschließlich ihres Bodeneinsatzes 39 ist ein Kanalsystem 41 ausgebildet. Ein zentraler Sammelkanal 42 des Kanalsystems 41 ist in dem Bodeneinsatz 39 ausgebildet und mündet mit einer Öffnung 43 in der Bodenfläche 38 der Blockform 18. Die zentrale Durchbrechung 35 der Dichtkappe 34 fluchtet mit der Öffnung 43 und mit einem Kanal 44 der Verbindungsvorrichtung 30. Der Kanal 44 mündet unten in eine Kammer 45 des Gehäuses 29, die unten durch eine Schraubkappe 46 verschlossen ist. Die Kammer 45 ist über eine Leitung 47 mit einem 3Wege/3Stellungsventil 48 verbunden, das an eine Vakuumleitung 49 und eine Druckluftleitung 50 angeschlossen ist.

Die Aufnahmevorrichtung 21 ist an ihrer Unterseite mit einem Sockel 51 versehen, der einen mit dem Unterteil 22 durch Schrauben 52 verschraubten Bodenring 53, ein mit dem Bodenring 53 verschweißtes Kühlgehäuse 54 und eine unten an das Kühlgehäuse 54 angeschweißte Grundplatte 55 aufweist. Die Grundplatte 55 ist durch Schrauben 56 mit einer Hubstange 57 verschraubt. Die Hubstange 57 kann durch einen nicht gezeigten Antrieb in den Richtungen des Doppelpfeils 58 zyklisch in axialer Richtung gehoben oder gesenkt werden. Durch diese Hubbewegung wird letztlich die Blockform 18 in ihre in Fig. 1 gezeichnete Arbeitsstellung angehoben oder in ihre Entformungsstellung abgesenkt.

Dem Kühlgehäuse 54 wird in Richtung eines Pfeils 59 durch einen Stutzen 60 Kühlluft zugeführt. Die Kühlluft strömt aus dem Kühlgehäuse 54 nach oben an dem Gehäuse 29 und dem Speichenring 26 vorbei in einen Ringraum 61 der Blockform 18. Durch diesen Weg ist ein Kühlluftkanal 62 definiert. Mit dem Ringraum 61 stehen achsparallele Kühlluftbohrungen 63 der Blockform 18 in ständiger Verbindung. Die Kühlluft 59 kann ständig eingeschaltet sein, jedoch auch je nach Bedarf während des Betriebszyklus getaktet werden.

Wenn durch den Stutzen 14 Druckluft 15 in das Innere des Külbels 12 gelangt, wird ein Ringraum 64 zwischen dem Külbel 12 und der Fertigform 2 über das Kanalsystem 41 und das Wegeventil 48 mit der Vakuumleitung 49 verbunden. Dazu weist das Kanalsystem 41 einen ersten Umfangsspalt 65 zwischen dem freien Rand 20 der Blockform 18 und den geschlossenen Fertigformhälften 3, 4 auf. Bestandteil des Kanalsystems 41 ist ferner ein zweiter Umfangsspalt 66 am Boden der Formausnehmung 16. Der zweite Umfangsspalt 66 ist radial innen durch den Bodeneinsatz 39 der Blockform 18 begrenzt. So wird also die Luft aus dem Ringraum 64 in zwei axialen Ebenen der Formausnehmung 16 und damit sehr gleichmäßig durch die Umfangsspalte 65, 66 abgezogen.

Zum Entformen des fertigen Glasbehälters 19 wird dieser zunächst an seiner Mündung 11 durch einen an sich bekannten Ausnehmermechanismus ergriffen. Sodann werden die Fertigformhälften 3, 4 geöffnet und die Hubstange 57 mitsamt der Blockform 18 abgesenkt. Während dieses Absenkens wird zur Unterstützung des Lösens des Glasbehälters 19 von der Innenwand 17 Druckluft aus der Druckluftleitung 50 durch Umsteuern des Wegeventils 48 in das Kanalsystem 41 eingeleitet. Druckluft gelangt auf diese Weise auch in die Ringspalte 65, 66 und letztlich zwischen den Glasbehälter 19 und die Blockform 18.

In allen Zeichnungsfiguren sind gleiche Teile mit gleichen Bezugszahlen versehen.

Die Fertigformstation 1 gemäß dem Ausführungsbeispiel nach Fig. 2 ähnelt der Fertigformstation 1 gemäß Fig. 1 von der Blockform18 an abwärts. Auch in Fig. 2 ist die geschlossene Fertigform 2 dargestellt, wobei einerseits das Külbel 12 in strichpunktierten Linien und andererseits der fertige Glasbehälter 19 mit voll ausgezogenen Linien dargestellt sind. Gemäß Fig. 2 finden allerdings die in Fig. 1 gezeigten Fertigformhälften 3, 4 keine Verwendung. Ein Maschinentyp, bei dem diese Betriebsweise möglich ist, ist in der eingangs erwähnten DE-Patentschrift 1 704 112 dargestellt und beschrieben.

Bei einem solchen Maschinentyp wird das Külbel 12 in einer Vorform hergestellt, deren Bestandteil vorübergehend auch eine Mündungsform 67 ist. Die Mündungsform 67 weist ein längsgeteiltes Mündungswerkzeug 68 mit Mündungswerkzeughälften 69 und 70 auf, in denen in an sich bekannter Weise ein nicht längsgeteilter Führungsring 71 auch bei geöffnetem Mündungswerkzeug 68 gehalten ist. Die Mündungswerkzeughälften 69, 70 sind jeweils in einer Mündungswerkzeughalterhälfte 72 und 73 in den Richtungen von Doppelpfeilen 74 und 75 entweder linear oder auf einem Kreisbogen zwischen der in Fig. 2 dargestellten geschlossenen Stellung und einer das Mündungswerkzeug 68 öffnenden Stellung bewegbar.

Nach der Formung des Külbels 12 in der Vorformstation verbleibt das Külbel 12 mit seiner Mündung 11 in der geschlossenen Mündungsform 67 und wird mit der Mündungsform 67 von der Vorformstation in die Fertigformstation 1 transportiert. Dort angekommen, wird die Hubstange 57 mitsamt der Blockform 18 bis in die in Fig. 2 gezeichnete obere Arbeitsstellung angehoben. In der Arbeitsstellung übergreift ein oberer Randflansch 76 der Blockform 18 ein unteres Ende des Mündungswerkzeugs 68 zur gegenseitigen Zentrierung. Dabei liegt der freie Rand 20 der Blockform 18 an einer Gegenfläche 77 des Mündungswerkzeugs 68 an, mit Ausnahme allerdings des radial innen liegenden ersten Umfangsspalts 65.

Sodann wird der Blaskopf 13 in der in Fig. 2 gezeigten Weise von oben auf den Führungsring 71 aufgesetzt und Druckluft 15 in das Innere des Külbels 12 geblasen, bis das Külbel 12 zu dem fertigen Glasbehälter 19 fertig geformt worden ist. Auch während dieses Fertigblasens sind die Umfangsspalten 65, 66, das Kanalsystem 41 und der Kanal 44 über das Wegeventil 48 an die Vakuumleitung 49 gelegt.

Zum Entformen des fertigen Glasbehälters 19 wird das Wegeventil 48 so umgeschaltet, dass jetzt die Druckluftleitung 50 mit dem Kanal 44, dem Kanalsystem 41 und den Umfangsspalten 65, 66 in Verbindung steht. Sodann wird die Hubstange 57 abwärts bewegt, bis sich die Blockform 18 in ihrer unteren Entformungsstellung befindet. In dieser Entformungsstellung ist eine oberste Begrenzung der Blockform 18 mit Abstand unterhalb des fertigen Glasbehälters 19 angeordnet. So kann nach Entfernung des Blaskopfes 13 aus einer axialen Durchbrechung 78 der Mündungsform 67 der fertige Glasbehälter 19 an dem weiterhin geschlossenen Mündungswerkzeug 68 aus der Fertigformstation 1 in eine Abgabestation transportiert werden, die nicht gezeichnet ist. In der Abgabestation wird das Mündungswerkzeug 68 geöffnet und gibt dabei die Mündung 11 des fertigen Glasbehälters 19 frei. Der fertige Glasbehälter 19 wird dadurch z.B. auf ein Transportband zum Abtransport übergeben.

## Patentansprüche

1. Verfahren zum Fertigblasen eines Külbels (12) in einer Fertigform (2) einer Fertigformstation (1) einer Glasformmaschine zu einem fertigen Glasbehälter (19), mit folgenden Schritten:
(a) Das Külbel (12) wird durch ein geschlossenes längsgeteiltes Mündungswerkzeug (68) einer Mündungsform (67) gehalten und in die Fertigformstation (1) transportiert,
(b) eine nicht längsgeteilte Blockform (18) wird aus einer Entformungsstellung axial in eine Arbeitsstellung (Fig. 1) bewegt,
(c) Fertigformhälften (3,4) der Fertigform (2) werden angrenzend an das geschlossene Mündungswerkzeug (68) geschlossen und dabei in formschlüssige Berührung mit einer Mündung (11) des Külbels (12) gebracht, und zwar nur mit einer axial kurzen Ringzone (10) an der Mündung (11) und wenigstens mit einem freien Rand (20) der Blockform (18),
(d) das Mündungswerkzeug (68) wird geöffnet und entfernt,
(e) über die Mündung (11) und in Berührung mit den geschlossenen Fertigformhälften (3,4) wird ein Blaskopf (13) gestülpt,
(f) durch den Blaskopf (13) wird Druckluft in das Innere des Külbels (12) eingeleitet und das Külbel (12) zu dem fertigen Glasbehälter (19) in Anlage an der Fertigform (2) fertiggeblasen,
(g der Blaskopf (13) wird entfernt, und
(h) die Fertigformhälften (3,4) werden geöffnet und der fertige Glasbehälter (19) abtransportiert, wobei die Blockform (18) zur Entformung des fertigen Glasbehälters (19) aus der Blockform (18) in axialer Richtung aus ihrer Arbeitsstellung (Fig. 1) in ihre Entformungsstellung bewegt wird.

2. Verfahren zum Fertigblasen eines Külbels (12) in einer Fertigform (2) einer Fertigformstation (1) einer Glasformmaschine zu einem fertigen Glasbehälter (19), mit folgenden Schritten:
(a) Das Külbel (12) wird durch ein geschlossenes längsgeteiltes Mündungswerkzeug (68) einer Mündungsform (67) gehalten und in die Fertigformstation (1) transportiert,
(b) die Fertigform (2) wird unter Einbeziehung der geschlossenen Mündungsform (67) vervollständigt, wobei eine nicht längsgeteilte Blockform (18) aus einer Entformungsstellung axial in eine Arbeitsstellung (Fig. 2) in Berührung mit dem geschlossenen Mündungswerkzeug (68) bewegt wird, wobei ein oberer Randflansch der Blockform (18) ein unteres Ende des Mündungswerkzeugs übergreift,
(c) auf eine axiale Durchbrechung (78) der geschlossenen Mündungsform (67) wird ein Blaskopf (13) gesetzt,
(d) durch den Blaskopf (13) wird Druckluft in das Innere des Külbels (12) eingeleitet und das Külbel (12) zu dem fertigen Glasbehälter (19) in drehungsfreier Anlage an der Fertigform (2) fertiggeblasen,
(e) der Blaskopf wird entfernt,
(f) der fertige Glasbehälter wird durch Öffnen der Fertigform entformt, wobei die Blockform (18) zur Entformung des fertigen Glasbehälters (19) aus der Blockform (18) in axialer Richtung aus ihrer Arbeitsstellung (Fig. 2) in ihre Entformungsstellung bewegt wird und
(g) der fertige Glasbehälter (19) wird durch Öffnen des Mündungswerkzeugs (68) zum Abtransport freigegeben.

3. Verfahren nach Anspruch 1 oder 2,
**dadurch gekennzeichnet, dass** im Schritt (f) gemäß Anspruch 1 oder im Schritt (d) gemäß Anspruch 2 ein Ringraum (64) zwischen dem Külbel (12) und der Fertigform (2) über ein Kanalsystem (41) in der Fertigform (2) und über ein Wegeventil (48) mit einer Vakuumleitung (49) verbunden wird.

4. Verfahren nach einem der Ansprüche 1 bis 3,
**dadurch gekennzeichnet, dass** im Schritt (h) gemäß Anspruch 1 oder im Schritt (f) gemäß Anspruch 2 zwischen den fertigen Glasbehälter (19) und die Fertigform (2) über ein Kanalsystem (41) in der Fertigform (2) und über ein Wegeventil (48) aus einer Druckluftleitung (50) Druckluft geblasen wird.

5. Fertigformstation (1) einer Glasformmaschine
mit einer Fertigform (2) die zum Fertigblasen eines Külbels (12) zu einem Glasbehälter (19) bestimmt ist,
wobei die Fertigform (2) längsgeteilt ist und Fertigformhälften (3,4) aufweist,
wobei die Fertigformhälften (3,4) quer zu einer Längsachse (9) der Fertigform (2) zwischen einer offenen und einer geschlossenen Stellung (Fig. 1) hin und her bewegbar angeordnet sind,
wobei die Fertigformhälften (3,4) in ihrer geschlossenen Stellung (Fig. 1) in formschlüssiger Berührung mit einer Mündung (11) des Külbels (12) stehen,
mit einem Blaskopf (13), der über die Mündung (11) und in Berührung mit den geschlossenen Fertigformhälften (3,4) dazu bestimmt ist, Druckluft in das Innere des Külbels (12) einzuleiten und des Külbel (12) zu dem fertigen Glasbehälter (19) in Anlage an der Fertigform (2) fertig zu blasen,
wobei die Fertigform (2) eine zwischen einer Entformungsstellung und einer Arbeitsstellung (Fig. 1) axial hin und her bewegbare Blockform (18) aufweist und
wobei die geschlossenen Fertigformhälften (3,4) nur mit einer axial kurzen Ringzone (10) an der Mündung (11) des Külbels (12) und des fertigen Glasbehälters (19) und wenigstens mit einem freien Rand (20) der in ihrer Arbeitsstellung (Fig. 1) befindlichen Blockform (18) in Berührung stehen.

6. Fertigformstation (1) einer Glasformmaschine,
mit einer Fertigform (2), die dazu bestimmt ist, ein Külbel (12) zu einem fertigen Glasbehälter (19) fertig zu blasen,
mit einer, ein längsgeteiltes, zwischen einer geschlossenen und einer geöffneten Stellung bewegbares Mündungwerkzeug (68) aufweisender Mündungsform (67), wobei das Mündungswerkzeug (68) in der geschlossenen Stellung zum Transport des Külbels (12) in die Fertigformstation (1) eingerichtet ist,
wobei in der Fertigformstation (1) die Fertigform (2) unter Einbeziehung der geschlossenen Mündungsform (67) vervollständigt ist,
mit einem, auf eine axiale Durchbrechung (78) der geschlossenen Mündungsform (67) des Külbels (12) aufgesetzten Blaskopf (13), der dazu bestimmt ist, Druckluft in das Innere des Külbels einzuleiten und das Külbel in drehungsfreier Anlage an der Fertigform (2) zu einem fertigen Glasbehälter (19) fertig zu blasen,
wobei die Fertigform (2) mit einer Blockform (18) ausgerüstet ist, die zwischen einer Entformungsstellung und einer Arbeitsstellung (Fig. 2) axial hinund hergehend bewegbar angeordnet ist,
wobei bei geschlossener Fertigform (2) ein freier Rand (20) der Blockform (18) in Berührung mit dem geschlossenen Mündungswerkzeug (68) steht und ein oberer Randflansch (76) der Blockform (18) ein unteres Ende des Mündungswerkzeugs (68) übergreift.

7. Fertigformstation nach Anspruch 5 oder 6,
**dadurch gekennzeichnet, dass** in der Blockform (18) ein Kanalsystem (41) ausgebildet ist,
und dass das Kanalsystem (41) einerseits ständig mit einer Formausnehmung (16) der Fertigform (2) verbunden ist und andererseits über ein Wegeventil (48) wahlweise mit einer Vakuumleitung (49) oder einer Druckluftleitung (50) verbindbar ist.

8. Fertigformstation nach einem der Ansprüche 5 bis 7,
**dadurch gekennzeichnet, dass** die Blockform (18) in einer axial bewegbaren Aufnahmevorrichtung (21) lösbar gehalten ist.

9. Fertigformstation nach Anspruch 8,
**dadurch gekennzeichnet, dass** ein Sammelkanal (42) des Kanalsystems (41) in eine Öffnung (43) in einer Bodenfläche (38) der Blockform (18) mündet,
dass eine Verbindungsvorrichtung (30) an der Aufnahmevorrichtung (21) abgestützt ist,
und dass ein Kanal (44) der Verbindungsvorrichtung (30) einerseits mit der Öffnung (43) und andererseits mit dem Wegeventil (48) verbunden ist.

10. Fertigformstation nach einem der Ansprüche 7 bis 9,
**dadurch gekennzeichnet, dass** das Kanalsystem (41) einen ersten Umfangsspalt (65) zwischen einerseits dem freien Rand (20) der Blockform (18) und andererseits den geschlossenen Fertigformhälften (3,4; Fig. 1) oder einer Gegenfläche (77) des geschlossenen Mündungswerkzeugs (68; Fig. 2) aufweist.

## Claims

1. Method of final blowing a parison (12) in a blow-mould (2) of a blow-moulding station (1) of a glassware forming machine to produce a finished glass container (19), comprising the following steps:
(a) the parison (12) is held by means of a closed, longitudinally-divided neck ring (68) of a neck mould (67) and is transported to the blow-moulding station (1),
(b) a block mould (18) which is not divided longitudinally is moved axially from a removal position to a working position (Figure 1),
(c) blow-mould halves (3, 4) of the blow-mould (2) are closed adjacent to the closed neck ring (68) and are brought into form-fitting contact with a mouth (11) of the parison (12), and in particular only with one axially short annular zone (10) at the mouth (11) and at least with a free edge (20) of the block mould (18),
(d) the neck ring (68) is opened and removed,
(e) a blowing head (13) is inverted over the mouth (11) and in contact with the closed blow-mould halves (3, 4),
(f) compressed air is introduced by means of the blowing head (13) into the interior of the parison (12) and the parison (12) is subjected to final blowing to produce the finished glass container (19) in abutment against the blow-mould (2),
(g) the blowing head (13) is removed, and
(h) the blow-mould halves (3, 4) are opened and the finished glass container (19) is conveyed away, wherein the block mould (18) is moved in an axial direction from its working position (Figure 1) to its removal position for the purpose of removing the finished glass container (19) from the block mould (18).

2. Method of final blowing a parison (12) in a blow-mould (2) of a blow-moulding station (1) of a glassware forming machine to produce a finished glass container (19), comprising the following steps:
(a) the parison (12) is held by means of a closed, longitudinally-divided neck ring (68) of a neck mould (67) and is transported to the blow-moulding station (1),
(b) the blow-mould (2) is completed with the incorporation of the closed neck mould (67), wherein a block mould (18) which is not divided longitudinally is moved axially from a removal position into a working position (Figure 2) in contact with the closed neck ring (68), wherein an upper edge flange of the block mould (18) engages over a lower end of the neck ring, and
(c) a blowing head (13) is placed on to an axial opening (78) of the closed neck mould (67),
(d) compressed air is introduced by means of the blowing head (13) into the interior of the parison (12) and the parison (12) is subjected to final blowing to produce the finished glass container (19) in rotation-free abutment against the blow-mould (2),
(e) the blowing head (13) is removed,
(f) the finished glass container is removed from the mould by opening the blow-mould, wherein the block mould (18) is moved in an axial direction from its working position (Figure 2) to its removal position for the purpose of removing the finished glass container (19) from the block mould (18) and
(g) by opening the neck ring (68) the finished glass container (19) is released so as to be conveyed away.

3. Method as claimed in claim 1 or 2,
**characterised in that** in step (f) as claimed in claim 1 or in step (d) as claimed in claim 2 an annular chamber (64) between the parison (12) and the blow-mould (2) is connected via a channel system (41) in the blow-mould (2) and via a directional control valve (48) to a vacuum line (49).

4. Method as claimed in any of claims 1 to 3,
**characterised in that** in step (h) as claimed in claim 1 or in step (f) as claimed in claim 2 compressed air is blown from a compressed air line (50) between the finished glass container (19) and the blow-mould (2) via a channel system (41) in the blow-mould (2) and via a directional control valve (48).

5. Blow-moulding station (1) of a glassware forming machine
having a blow-mould (2) which is intended for final blowing of a parison (12) to produce a glass container (19),
wherein the blow-mould (2) is divided longitudinally and comprises blow-mould halves (3, 4),
wherein the blow-mould halves (3, 4) are disposed so that they can be moved in a reciprocating manner transversely with respect to a longitudinal axis (9) of the blow-mould (2) between an open and a closed position (Figure 1),
wherein the blow-mould halves (3, 4) in their closed position (Figure 1) are in form-fitting contact with a mouth (11) of the parison (12),
having a blowing head (13) which, via the mouth (11) and in contact with the closed blow-mould halves (3, 4), is intended to introduce compressed air into the interior of the parison (12) and to subject the parison (12) to final blowing to produce the finished glass container (19) in abutment against the blow-mould (2),
wherein the blow-mould (2) comprises a block mould (18) which can be moved axially in a reciprocating manner between a removal position and a working position (Figure 1) and
wherein the closed blow-mould halves (3, 4) are in contact only with one axially short annular zone (10) at the mouth (11) of the parison (12) and of the finished glass container (19) and at least with a free edge (20) of the block mould (18) located in its working position (Figure 1).

6. Blow-moulding station (1) of a glassware forming machine,
having a blow-mould (2) which is intended to subject a parison (12) to final blowing to produce a finished glass container (19),
having a neck mould (67) comprising a longitudinally-divided neck ring (68) which can be moved between a closed and an open position, wherein the neck ring (68) in the closed position is arranged to transport the parison (12) into the blow-moulding station (1),
wherein in the blow-moulding station (1) the blow-mould (2) is completed with the incorporation of the closed neck mould (67),
having a blowing head (13) which is placed on to an axial opening (78) of the closed neck mould (67) of the parison (12) and which is intended to introduce compressed air into the interior of the parison and to subject the parison to final blowing to produce a finished glass container (19) in rotation-free abutment against the blow-mould (2),
wherein the blow-mould (2) is fitted with a block mould (18) which is disposed so that it can be moved axially in a reciprocating manner between a removal position and a working position (Figure 2),
wherein when the blow-mould (2) is closed a free edge (20) of the block mould (18) is in contact with the closed neck ring (68) and an upper edge flange (76) of the block mould (18) engages over a lower end of the neck ring (68).

7. Blow-moulding station as claimed in claim 5 or 6,
**characterised in that** a channel system (41) is formed in the block mould (18),
and that on the one hand the channel system (41) is continuously connected to a mould recess (16) of the blow-mould (2) and on the other hand can be optionally connected to a vacuum line (49) or a compressed air line (50) via a directional control valve (48).

8. Blow-moulding station as claimed in any of claims 5 to 7,
**characterised in that** the block mould (18) is held in a releasable manner in an axially movable receiving device (21).

9. Blow-moulding station as claimed in claim 8,
**characterised in that** a collecting channel (42) of the channel system (41) issues into an orifice (43) in a base surface (38) of the block mould (18),
that a connection device (30) is supported on the receiving device (21),
and that a channel (44) of the connection device (30) is connected on the one hand to the orifice (43) and on the other hand to the directional control valve (48).

10. Blow-moulding station as claimed in any of claims 7 to 9,
**characterised in that** the channel system (41) comprises a first circumferential gap (65) between on the one hand the free edge (20) of the block mould (18) and on the other hand the closed blow-mould halves (3, 4; Figure 1) or a counter-surface (77) of the closed neck ring (68; Figure 2).

## Revendications

1. Procédé de soufflage finisseur d'une ébauche (12) dans un moule finisseur (2) d'un poste de moulage finisseur (1) d'une machine de moulage du verre en un contenant en verre final (19), comprenant les étapes suivantes consistant à :
(a) maintenir l'ébauche (12) au moyen d'un outil (68) fermé et divisé dans le sens de la longueur d'un moule de bague (67) et la transporter dans le poste de moulage finisseur (1),
(b) déplacer axialement, en partant d'une position de démoulage, un moule (18) non divisé dans le sens de la longueur dans une position de travail (figure 1),
(c) fermer les moitiés (3, 4) du moule finisseur (2) adjacentes à l'outil de moule de bague fermé (68) et les amener en contact par complémentarité de forme avec une bague (11) de l'ébauche (12), en vérité uniquement avec une zone annulaire axialement courte (10) sur la bague (11) et au moins avec un bord libre (20) du moule (18),
(d) ouvrir et éloigner l'outil (68) du moule de bague,
(e) emboutir une tête de soufflage (13) sur la bague (11) et au contact des moitiés fermées (3, 4) du moule finisseur,
(f) appliquer de l'air sous pression à l'intérieur de l'ébauche (12) par la tête de soufflage (13) et souffler l'ébauche (12) à sa forme finale en un contenant en verre final (19) dans l'installation sur le moule finisseur (2),
(g) éloigner la tête dé soufflage (13), et
(h) ouvrir les moitiés (3, 4) du moule finisseur et enlever le contenant en verre final (19), en déplaçant de sa position de travail (figure 1) jusque dans sa position de démoulage le moule (18) destiné à démouler le contenant en verre final (19) du moule (18) positionné dans la direction axiale.

2. Procédé de soufflage finisseur d'une ébauche (12) dans un moule finisseur (2) d'un poste de moulage finisseur (1) d'une machine de moulage du verre en un contenant en verre final (19), comprenant les étapes suivantes consistant à :
(a) maintenir l'ébauche (12) au moyen d'un outil (68) fermé et divisé dans le sens de la longueur d'un moule de bague (67) et la transporter dans le poste de moulage finisseur (1),
(b) compléter le moule finisseur (2) par intégration du moule de bague (67) fermé, en déplaçant axialement un moule (18) non divisé dans le sens de la longueur d'une position de démoulage à une position de travail (figure 2) en contact avec l'outil de moule de bague fermé (68), un rebord supérieur du moule (18) empiétant sur une extrémité inférieure de l'outil du moule de bague,
(c) placer une tête de soufflage (13) sur une perforation (78) axiale du moule de bague (67) fermé,
(d) appliquer de l'air sous pression à l'intérieur de l'ébauche (12) par la tête de soufflage (13) et souffler l'ébauche (12) à sa forme finale en un contenant en verre final (19) dans l'installation non rotative sur le moule finisseur (2),
(e) éloigner la tête de soufflage (13),
(f) démouler le contenant en verre final par l'orifice du moule finisseur, le moule (18) destiné à démouler le conteneur en verre final (19) du moule (18) étant déplacé dans la direction axiale de sa position de travail (figure 2) à sa position de démoulage, et
(g) libérer le contenant en verre final (19) par l'orifice de l'outil (68) du moule de bague pour le transporter.

3. Procédé selon la revendication 1 ou 2,
**caractérisé en ce que**, à l'étape (f) selon la revendication 1 ou à l'étape (d) selon la revendication 2, un espace annulaire (64) entre l'ébauche (12) et le moule finisseur (2) est relié à une conduite sous vide (49) par un système de canaux (41) dans le moule finisseur (2) et par une soupape d'acheminement (48).

4. Procédé selon l'une des revendications 1 à 3,
**caractérisé en ce que**, à l'étape (h) selon la revendication 1 ou à l'étape (f) selon la revendication 2, entre le contenant en verre final (19) et le moule finisseur (2), de l'air sous pression est soufflé par un système de canaux (41) dans le moule finisseur (2) et par une soupape d'acheminement (48) à partir d'une conduite d'air comprimé (50).

5. Poste de moulage finisseur (1) d'une machine de moulage du verre,
comprenant un moule finisseur (2) qui est destiné à souffler une ébauche (12) à sa forme finale en un contenant en verre (19),
dans lequel le moule finisseur (2) est divisé dans le sens de la longueur et présente des moitiés (3, 4) de moule finisseur,
dans lequel les moitiés (3, 4) du moule finisseur sont disposées transversalement à un axe longitudinal (9) du moule finisseur (2) de manière à se déplacer entre une position ouverte et une fermée (figure 1) et inversement,
dans lequel les moitiés (3, 4) du moule finisseur sont en contact par complémentarité de forme avec une bague (11) de l'ébauche (12) dans leur position fermée (figure 1),
comprenant une tête de soufflage (13) qui est destinée, sur la bague (11) et en contact avec les moitiés fermées (3, 4) du moule finisseur, à appliquer de l'air sous pression à l'intérieur de l'ébauche (12) et à souffler l'ébauche (12) à sa forme finale en un contenant en verre final (19) dans l'installation sur le moule finisseur (2),
dans lequel le moule finisseur (2) présente un moule (18) mobile axialement entre une position de démoulage et une position de travail (figure 1) et inversement, et
dans lequel les moitiés fermées (3, 4) du moule finisseur sont uniquement en contact avec une zone annulaire axialement courte (10) sur la bague (11) de l'ébauche (12) et du contenant en verre final (19) et au moins avec un bord libre (20) du moule (18) se trouvant dans sa position de travail (figure 1).

6. Poste de moulage finisseur (1) d'une machine de moulage de verre,
comprenant un moule finisseur (2) qui est destiné à souffler une ébauche (12) à sa forme finale en un contenant en verre final (19),
comprenant un moule de bague (67) présentant un outil de moule de bague (68) divisé dans le sens de la longueur et mobile entre une position fermée et une position ouverte, l'outil de moule de bague (68) étant monté dans la position fermée pour transporter l'ébauche (12) dans le poste de moulage finisseur (1),
dans lequel, dans le poste de moulage finisseur (1), le moule finisseur (2) est complété par l'intégration du moule de bague (67) fermé,
comprenant une tête de soufflage (13) disposée sur une perforation (78) axiale du moule de bague (67) fermé de l'ébauche (12), qui est destinée à appliquer de l'air sous pression à l'intérieur de l'ébauche et à souffler l'ébauche à sa forme finale dans l'installation non rotative sur le moule finisseur (2) en un contenant en verre final (19),
dans lequel le moule finisseur (2) est doté d'un moule (18) qui est disposé mobile axialement dans un va-et-vient entre une position de démoulage et une position de travail (figure 2),
dans lequel, lorsque le moule finisseur (2) est fermé, un bord libre (20) du moule (18) est en contact avec l'outil de moule de bague (68) fermé et un rebord supérieur (76) du moule (18) empiète sur une extrémité inférieure de l'outil de moule de bague (68).

7. Poste de moulage finisseur selon la revendication 5 ou 6,
**caractérisé en ce qu'**un système de canaux (41) est configuré dans le moule (18),
et **en ce que** le système de canaux (41) est relié d'une part en continu à une cavité de moulage (16) du moule finisseur (2) et peut être relié d'autre part de manière sélective, au moyen d'une soupape (48), à une conduite sous vide (49) ou à une conduite d'air comprimé (50).

8. Poste de moulage finisseur selon l'une des revendications 5 à 7,
**caractérisé en ce que** le moule (18) est maintenu amovible dans un dispositif de réception (21) mobile axialement.

9. Poste de moulage finisseur selon la revendication 8,
**caractérisé en ce qu'**un canal de regroupement (42) du système de canaux (41) débouche dans un orifice (43) dans une surface de fond (38) du moule (18),
**en ce qu'**un dispositif de liaison (30) est supporté sur le dispositif de réception (21),
et **en ce qu'**un canal (44) du dispositif de liaison (30) est relié d'une part à l'orifice (43) et d'autre part à la soupape d'acheminement (48).

10. Poste de moulage finisseur selon l'une des revendications 7 à 9,
**caractérisé en ce que** le système de canaux (41) présente une première fente périphérique (65) entre d'une part le bord libre (20) du moule (18) et d'autre part les moitiés fermées (3, 4 ; figure 1) du moule finisseur ou une contre-face (77) de l'outil de moule de bague (68 ; figure 2) fermé.
